# EUROPEAN PATENT APPLICATION

(11) **EP 4 550 004 A1**
(43) Date of publication of application: **07.05.2025**
(21) Application number: 24209893.7
(22) Date of filing: 30.10.2024
(51) Int. Cl.: G01T 1/29, G01T 5/00, G01T 5/02

(54) **COSMIC RAY DETECTOR, METHOD FOR DETECTING COSMIC RAYS, SYSTEM FOR FACILITATING EARTHQUAKE PREDICTION BY DETECTING COSMIC RAYS AND METHOD FOR FACILITATING EARTHQUAKE PREDICTION BY DETECTING COSMIC RAYS**

(30) Priority: 01.11.2023 US 202363546906 P
(71) Applicant: Astrotectonic Sp. z o.o., 35-069 Rzeszow (PL)
(72) Inventor: Zabari, Itamar, Zielonki (PL); Cheminant, Kevin, Krakow (PL); Zabari, Noemi, Zielonki (PL)
(74) Representative: AOMB Polska Sp. z.o.o.

(57) **Abstract**

The subject matter of the invention is a cosmic ray detector comprises a digital part (1) and an analog part (2). The analog part (2) includes a top scintillator (11) coupled with a first silicon photomultiplier - SiPM (12) and a bottom scintillator (13) coupled with a second silicon photomultiplier - SiPM (14). The second subject matter of the invention is a method for detecting cosmic rays executed using the cosmic ray detector according to the invention. The third subject matter of the invention is a system for facilitating earthquake prediction by detecting cosmic rays. The system includes a processing device (100), a communication device (101), and a storage device (102). The communication device (101) is configured for receiving a plurality of cosmic rays information from a plurality of cosmic ray detectors (104) according to the invention. The fourth subject matter of the invention is a method for facilitating earthquake prediction by detecting cosmic rays executed using the system according to the invention.

## Description

### Technical field

The subject matter of the present invention is a cosmic ray detector, a method for detecting cosmic rays utilizing the cosmic ray detector according to the invention, system for facilitating earthquake prediction by detecting cosmic rays, utilizing the cosmic ray detectors according to the invention and method for facilitating earthquake prediction by detecting cosmic rays utilizing system for facilitating earthquake prediction by detecting cosmic rays according to the invention. This invention relates to the field of systems, methods and algorithms utilized for earthquake predictions and forecasts. These kind of systems and methods could be used in different application related to ensuring of public safety.

### Background art

Forecasts and predictions of earthquakes, especially but not limited to earthquakes forecasting horizons of 14 days, 5 days, 3 days and 1 day, as well as in n days or within a time of hours, are of great importance for a safety purposes, especially for people live in areas at risk of earthquakes, those kind of forecasts will also provide crucial time frame to shutdown heavy industries, transportations, as well as gas, oil, chemical infrastructure, and nuclear powerplants. Therefore in state-of-the-art there are known several systems and methods for earthquake predictions, which are summarized below.

From the US patent US 7277797 B1 an apparatus is known which is intended to predict the onset of earthquakes, one to three days prior to the event. The apparatus predicts latitude, longitude, and time of occurrence of an incipient earthquake, by monitoring and exploiting unique changes in the ionosphere and atmosphere. Exploited signals and data could be radio-tomography of the ionosphere, data from satellite transmitters, data from ground-based radars that display unique clutter maps during earthquake pre-cursor activity, data from cellular telephone networks that display signal fading, gravity waves, internal gravity waves, solitions, solitary waves, total electron content, man-made and natural noise sources, magnetospheric influences, archival records, seasonal effects, phase, amplitude, and frequency fluctuations in the ionosphere, perturbations in the atmosphere, and the time-values of the above parameters, since they change rapidly. In some embodiments, the apparatus uses cellular telephone signal fading, radar, and satellite transmissions through the ionosphere to provide time, position, and magnitude of impending earthquakes.

From the US patent application US 20220196860 A1 a method and system are known, to recognize abnormal shaking over multiple cameras that interface with the cloud during an earthquake. The system determines whether a shaking identified in the processed input is above a predetermined threshold based on the processed input, thereby detecting one or more anomalies. The system infers at least one of a location, magnitude, or depth of an earthquake based on the shaking identified in the processed input. The system and method utilize an artificial intelligence (AI) model trained to detect parameters of an earthquake based on the visual input from the plurality of cameras, wherein the trained AI model is applied to visual input from a different set of a plurality of cameras at a separate location.

From the patent application TW 200847073 A an earthquake warning system is known, which comprises a plurality of first detecting apparatuses for continuously sensing the generation of a seismic wave, a processing apparatus, a first communicating apparatus, and a second communicating apparatus and a second detecting apparatus for measuring a movement level of a target and generating a second signal based on the movement level, wherein the processing apparatus is configured for receiving the first signals and the second signal, and generating a warning signal according to a criterion. The system can accurately judge the possibility of earthquake information reducing misjudgment. Moreover, the earthquake warning system of the present invention also includes multiple (five) communication devices for the purpose of quickly and safely issuing an earthquake alarm.

From scientific paper "Earthquakes magnitude predication using artificial neural network in northern Red Sea area" [Abdulrahman S.N. Alarifi, Nassir S.N. Alarifi, SaadAl-Humidan, Journal of King Saud University - Science, Volume 24, Issue 4, October 2012, Pages 301-313*]* an application of artificial intelligent prediction system based on artificial neural network to predicate the magnitude of future earthquakes is known. The earthquakes are predicted based on feed forward neural network model with multi-hidden layers. The system is configured for data acquisition, pre-processing, feature extraction, and neural network training and testing. The system analyzes data such as radon concentration, ionospheric disturbances, etc. to predict future earthquakes.

### Technical problem - a purpose of the invention

Existing techniques for facilitating earthquake prediction are deficient with regard to several aspects. Current technologies do not utilize cosmic ray data for accurately predicting seismic instability. Furthermore, current technologies do not utilize artificial intelligence models trained on seismic data for seamlessly predicting earthquakes. Therefore, there is a need for improved methods, systems, and devices for facilitating earthquake prediction by detecting cosmic rays that may overcome one or more of the above-mentioned problems and/or limitations.

### Summary of the invention

According to one aspect of the present invention, there is provided a cosmic ray detector characterized in that the cosmic ray detector comprises a digital part and an analog part, wherein the digital part includes a WiFi module communicatively coupled with a WiFi antenna connector, a GPS module communicatively coupled with a GPS antenna connector, a microcontroller, an analog-digital converter - ADC and a non-volatile memory, wherein the WiFi module, the GPS module, the ADC and the non-volatile memory are communicatively coupled with the microcontroller, the digital part further includes a power supply unit electrically coupled with the microcontroller and configured to provide a power supply to the microcontroller, wherein the analog part includes a top scintillator coupled with at least one first silicon photomultiplier - SiPM and a bottom scintillator coupled with at least one second silicon photomultiplier - SiPM, wherein the first SiPM and the second SiPM include a photodetector configured to detect single photons, the analog part further includes at least one amplifier, wherein the first SiPM and the second SiPM are coupled with the amplifier, yet further the analog part includes a DC/DC converter and at least one high voltage power supply - HVPS, wherein the DC/DC converter is communicatively coupled with the amplifier and the amplifier is electrically coupled with the HVPS, while the HVPS is configured to supply voltage to the first SiPM and the second SiPM within a range from 10 V to 100 V, and the DC/DC converter is communicatively coupled with the power supply unit, while the power supply unit is electrically coupled with the HVPS, wherein the DC/DC converter is configured to provide a correct supply voltage to the amplifier, and further, the analog part includes at least one analog track environment sensor and an analog track control unit, wherein the analog track control unit is an independent unit for controlling and monitoring the analog part, said analog track control unit is electrically coupled with the HVPS and communicatively coupled with the at least one analog track environment sensor, the microcontroller and the DC/DC converter, wherein the DC/DC converter is controlled from a level of the analog track control unit, and moreover the ADC is communicatively coupled with the amplifier.

Preferably, the top scintillator and/or the bottom scintillator have the same dimensions.

Further benefits are obtained, when the top scintillator and/or the bottom scintillator are dimensioned as 10 cm x 10 cm x 1 cm.

Preferably, the digital part includes an internal GPS antenna and the internal GPS antenna is coupled with the GPS antenna connector.

Other benefits are obtained, when the digital part includes at least one digital environment sensor and the digital environment sensor is communicatively coupled with the microcontroller.

Further benefits are obtained, when the digital part includes at least one position sensor and the position sensor is communicatively coupled with the microcontroller.

Preferably, the position sensor is an accelerometer and the position sensor is configured to determine a correct position of the cosmic ray detector.

Other benefits are obtained, when the digital part includes a display and the display is communicatively coupled with the microcontroller, wherein the display is configured to display a status of the cosmic ray detector.

Further benefits are obtained, when the digital part includes a micro SD card reader module and the micro SD card reader module is communicatively coupled with the microcontroller.

Preferably, the micro SD card reader module is configured to save detections.

Other benefits are obtained, when the analog track environment sensor is a temperature sensor.

Further benefits are obtained, when the non-volatile memory is configured to store settings intended to be unchanged.

Preferably, the non-volatile memory is configured to store errors and WiFi network settings.

Other benefits are obtained, when the at least one analog track environment sensor is configured to monitor the temperature of individual components and/or ambient temperature and/or humidity and/or pressure.

Further benefits are obtained, when the WiFi module is configured to provide a connection to the Internet.

Preferably, the GPS module is configured to provide a synchronization of a plurality of clocks associated with the cosmic ray detector and determines geographic location of the cosmic ray detector.

According to another aspect of the present invention, there is provided a method for detecting cosmic rays using the cosmic ray detector according to the invention, wherein in a first step a top scintillator and/or a bottom scintillator emits light in the UV and visible range after absorbing ionizing radiation (e.g., after being hit by a muon), wherein in a second step at least one of a first SiPM and/or a second SiPM detects the light signal (or signals) generated in at least one of the top scintillator and the bottom scintillator after capturing a cosmic ray particle, and next in a third step an amplifier amplifies a weak electrical signal (or signals) generated by the first SiPM and/or the second SiPM into a signal with a higher amplitude and in a fourth step the amplified signal goes to an ADC and in a fifth step a microcontroller analyzes signal from the ADC and sends analyzed data for further processing in other systems.

Preferably, in the third step, the amplifier conditions the signal to adapt it for further processing in next steps.

Other benefits are obtained, when in the fifth step, the microcontroller sends the analyzed data via the WiFi module.

Further benefits are obtained, when in the fifth step, the microcontroller stores the analyzed data in the micro SD card reader module.

Preferably, in the fifth step, the microcontroller displays the analyzed data on the display.

According to yet another aspect of the present invention, there is provided a system for facilitating earthquake prediction by detecting cosmic rays, characterized in that the system comprises a processing device, a communication device, and a storage device, wherein the communication device is communicatively coupled with the processing device and the storage device, while the storage device is communicatively coupled with the processing device, wherein the communication device is configured for receiving a plurality of cosmic rays information from a plurality of cosmic ray detectors according to the invention, installed in a plurality of locations and the communication device is configured for transmitting at least one alert to at least one client device associated with at least one client in at least one seismically risky location, wherein the at least one client device includes, but is not limited to, a smartphone, a laptop, a desktop, a smartwatch, a tablet computer, a disaster/emergency alarm system, and the processing device is configured for analyzing the plurality of cosmic rays information, as well as the processing device is configured for comparing a plurality of seismic stability data and the plurality of cosmic rays information and further determining at least one seismic risk factor corresponding to at least one location of the plurality of locations, yet further, the processing device is configured for identifying the at least one seismically risky location of the plurality of locations based on the at least one seismic risk factor and generating the at least one alert based on the identification, wherein the storage device is configured for retrieving the plurality of seismic stability data associated with the plurality of locations based on the analysis.

Preferably, the system is implemented in an online platform hosted on a centralized server, wherein the centralized server is communicatively coupled with other network entities, such as, for example, a mobile device chosen from, but not limited to the set of: a smartphone, a laptop, a tablet computer, other electronic devices chosen from, but not limited to the set of: desktop computers, server computers, databases, a disaster/emergency alarm systems, sensors, and actuators over a communication network such as, but not limited to the Internet, wherein the online platform is accessible through a web-based software application or browser compatible with a computing device, which includes at least one processing unit and a system memory, wherein the system memory includes operating system, at least one programming module, and a program data, while the system memory comprises, but is not limited to the set of: volatile (e.g., random-access memory (RAM)), non-volatile (e.g., read-only memory (ROM)), flash memory, or any combination, wherein the programming module includes at least one from the set of: image-processing module, machine learning module or image classifying module, and the operating system is suitable for controlling an operation of the computing device.

Preferably, the computing device includes at least one removable data storage device and/or at least one non-removable data storage device.

Other benefits are obtained, when the computing device includes at least one input device chosen from, but not limited to the set of: a keyboard, a mouse, a pen, a sound input device, a touch input device, a location sensor, a camera, a biometric sensor.

Further benefits are obtained, when the computing device includes at least one output device chosen from, but not limited to the set of: a display, speakers, a printer.

Preferably, the computing device includes a communication connection that allows the computing device to communicate with other computing devices.

According to yet another aspect of the present invention, there is provided a method for facilitating earthquake prediction by detecting cosmic rays wherein the method is executed using a system according to the invention and in a first step one receives, using a communication device, a plurality of cosmic rays information from a plurality of cosmic rays detectors according to the invention installed in a plurality of locations, and further in a second step one analyzes, using a processing device, the plurality of cosmic rays information, afterwards in a third step one retrieves, using a storage device, a plurality of cosmic ray data associated with the plurality of locations based on the analysis, afterwards in a fourth step one compares, using the processing device, the plurality of cosmic rays data and determines, using the processing device, at least one seismic risk factor corresponding to at least one location of the plurality of locations, and then in a fifth step one identifies, using the processing device, at least one seismically risky location of the plurality of locations based on the at least one seismic risk factor, afterwards in a sixth step one generates, using the processing device, at least one alert based on the identification and transmits, using the communication device, the at least one alert to at least one client device associated with at least one client in the at least one seismically risky location.

Preferably, in the first step one receives data from locations most relevant to earthquake monitoring and forecast, next in the second step one transmits the collected data to an online platform, and analyzes the data using machine learning algorithms included in a programming module using computing device, next in the third and the fourth step one extracts patterns based on the analysis and identifies correlations based on the extracted patterns, and in the fifth step one generates predictions regarding earthquake events analyzing the correlations from the fourth step, afterward in a sixth step one alerts clients in an earthquake-predicted area.

### Advantages of the invention - technical effect

The cosmic ray detector according to the invention has the ability to choose the direction of detection using the built-in coincidence function between the two detection blocks (top and bottom). Each of the detection blocks is equipped with the scintillator (top and bottom), which, when hit by an ionizing particle (including muons), emits electromagnetic radiation (a short flash of light), registered then by the silicon photomultiplier (SiPM). The top and bottom scintillators are characterized by a very fast response time, which makes them perfect for the detection of cosmic ray particles. The power supply is controlled by the microcontroller and the analog track control unit, which, after performing the voltage test, turns on the power supply to the amplifier, and then runs the HVPS independently for two or more channels, while controlling the voltage range determined during detector calibration. After starting the subsystems, the signal from the SiPM goes directly to the pulse-forming block, consisting of two or more independent tracks for two or more detection channels. The analog track consists of the pulse amplifier whose task is to amplify a weak and fast signal from the SiPM to a stronger signal (higher amplitude) that can be read by the ADC of the microcontroller. The first channel (CH1) amplifies the signal from the top scintillator, initiated by a particle which, by also activating the bottom scintillator, triggers the detection process by activating a coincidence. This process takes place at the microcontroller level and enables smooth adjustment of the coincidence detection time window in the calibration phase of the detector. After detecting the signal, the microcontroller starts analyzing the signal, starting with sending a timestamp. The device's time synchronization is achieved through the use of either the GPS module or the Internet connection. Following a self-test, the cosmic ray detector enters an idle state where it continuously monitors its own status and reports it. The detection mechanism is triggered when the signals surpass a specified threshold and occur within a designated time window. The cosmic ray detector sends a detection frame through the WiFi module containing at least: a timestamp, synchronization status, and ID.

The cosmic ray detector according to the invention addresses the challenge of identifying earthquake events by utilizing the correlation between cosmic ray rates and seismic activity. The system collects real-time data from cosmic ray detectors spread around the world, which are designed to be cost-effective, mobile, and easy to use. The device achieves several significant outcomes. It effectively addresses the challenge of identifying earthquake events by utilizing recent discoveries of the correlation between cosmic radiation and seismic activity. The system provides valuable insights into the processes preceding earthquake occurrences by collecting real-time data from a global network of dedicated cosmic ray detectors. The application of advanced deep learning models enables the accurate prediction of short-term and long-term earthquake events, thereby enhancing our ability to forecast seismic activity. The device offers cost-effective and accessible cosmic ray detectors that are easy to deploy and operate, making them suitable for seismic-active areas worldwide. The system's comprehensive approach contributes to our scientific understanding of earthquakes and enables practical applications, such as early warning systems, to mitigate the potential impact of seismic events. In case the client is a government, emergency management agency and other such entities, the client will have a disaster/emergency alarm system, or a system to receive earthquake forecasting alerts, which could be informed or alerted by the system according to the invention.

The role, advantages and functional description of the components for the analog part of the cosmic ray detector according to the invention are as follows:
Top and bottom scintillator - The purpose of the scintillator is to emit light in the UV and visible range after absorbing ionizing radiation (e.g., after being hit by a muon).

Silicon photomultiplier (SiPM) - SiPM is a type of photodetector designed to detect single photons. In the presented detector, the silicon photomultiplier, as a device powered by a relatively low voltage, replaces the classic photomultiplier tubes, which are vacuum tubes usually powered by high voltage in the range of 500 - 2500 V SiPM detect the light signals generated in the scintillator after it captures a cosmic ray particle.

Amplifier - The amplifier is an electronic circuit whose task is primarily to amplify a weak electrical signals generated by the photodetector into a signal with a higher amplitude. The amplifier's task is also to condition the signal, i.e., to adapt it for further processing by digital circuits. Conditioning the signal consists, among other things, in extending the signal, but without distorting it.

High Voltage Power Supply (HVPS) - This device is used to supply high voltage to the SiPM within a strictly defined range, specified by the SiPM manufacturer. The selection of the precise value of the high voltage takes place during the calibration of the detector. The applied HV power supplies have the ability to fully control the parameters from the level of the microcontroller. The entire process is fully automatic.

DC/DC Converter - The task of the DC/DC converter is to provide the correct supply voltage to the amplifier circuits. These devices are supplied with a symmetrical voltage of +/- 12V range, while the entire device is powered with a voltage of max. +9V. The converter is controlled from the level of the analog track control unit, where there is a small microcontroller that controls just switching the converter (on/off). The voltages at the output of the DC/DC converter are constant and stabilized. There is no need to change them from the program level.

Analog Track Environment Sensor - This block contains a set of environmental sensors that the components of the analog block are equipped with. The SiPM temperature measurement is carried out close to the contact surface with the scintillator, which makes it possible to take the temperature into account in the process of automatic calibration of the device after its start-up. Thermal compensation during operation is also possible. Temperature controllers are also located in the blocks of HVPS, thanks to which their temperature compensation is possible, as well as work safety is ensured (preventing overheating).

Analog Track Control Unit - Independent unit for controlling and monitoring the analog part of the cosmic ray detector. This module communicates with the main microcontroller to provide safe control of the analog part.

The role, advantages and functional description of the components for the digital part of the cosmic ray detector according to the invention are as follows:
Microcontroller - Main control unit for analyzing signals from the ADC and sending data.
Non-volatile memory - Settings that should not be changed are saved here. It can be also used to save errors and WiFi network settings.
Environment sensors - Mainly monitor the temperature of individual components and ambient temperature, humidity, and pressure.
Micro SD - Is needed to configure the device (mainly to set up the WiFi network) and allows to save detections.
WiFi module - Provides connection to the Internet.
GPS - Provides synchronization of device clocks and determines geographic location.
Display - Eases communication with users and can display device status.
Power Supply Unit - Provides power supply.
GPS antenna connector - Allows to connect an external GPS antenna
WiFi 2.4 GHz antenna connector- Allows to connect an external WiFi 2.4 GHz antenna (the cosmic ray detector could have its own built-in antenna, but signal strength can be improved by an external antenna).
Position sensors - Mainly uses an accelerometer to determine the correct position of the cosmic ray detector.

### Brief description of drawings

Different aspects of the invention are presented in embodiments in a drawing, where particular figures present as follows:

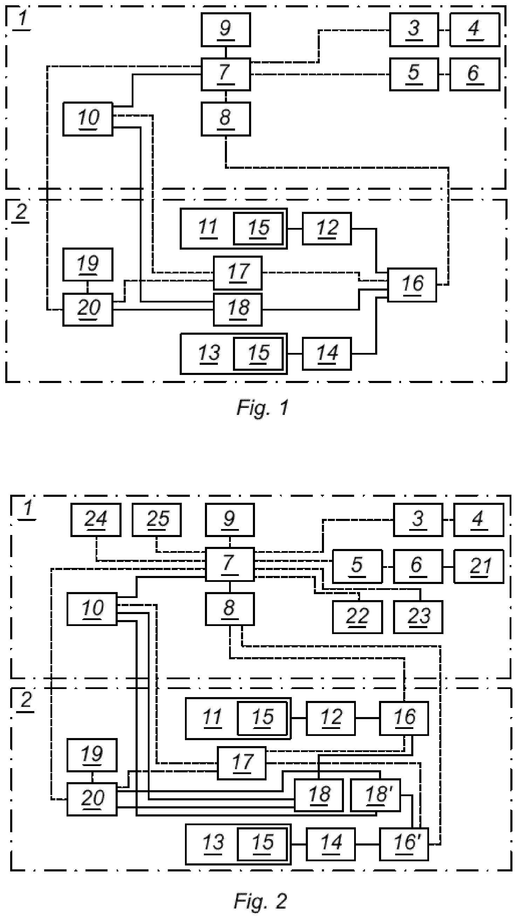

FIG. 1 is a block diagram of a cosmic ray detector in a first embodiment
FIG. 2 is a block diagram of a cosmic ray detector in a second embodiment

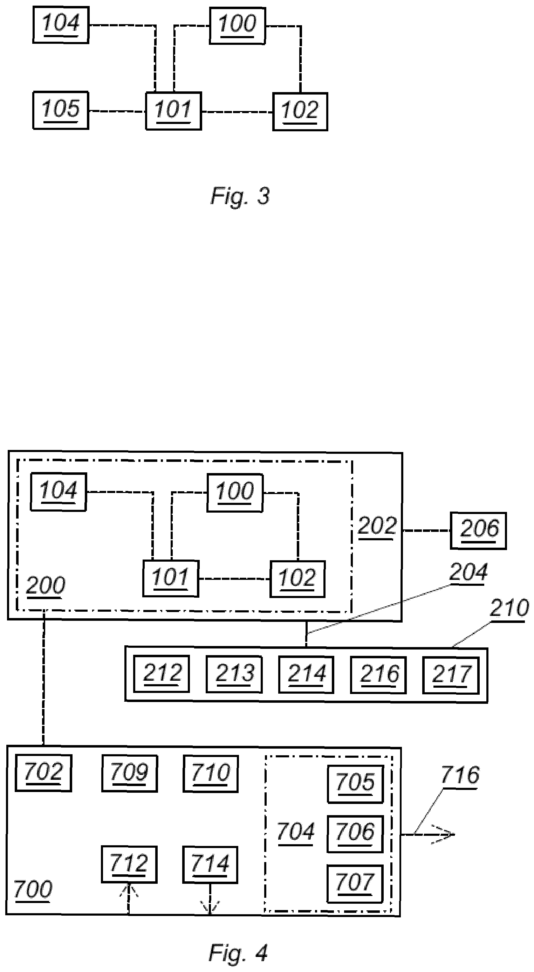

FIG. 3 is a block diagram of a system for facilitating earthquake prediction by detecting cosmic rays, in accordance with a first embodiment.
FIG. 4 is an illustration of a system for facilitating earthquake prediction by detecting cosmic rays implemented in an online platform, in accordance with a second embodiment.

### Detailed description of preferred embodiments and execution examples

Cosmic ray detector in a first embodiment comprises a digital part 1 and an analog part 2. The digital part 1 includes a WiFi module 3 communicatively coupled with a WiFi antenna connector 4. The digital part 1 includes also a GPS module 5 communicatively coupled with a GPS antenna connector 6. Furthermore, the digital part 1 includes a microcontroller 7, an analog-digital converter - ADC 8 and a non-volatile memory 9. The WiFi module 3, the GPS module 5, the ADC 8 and the non-volatile memory 9 are communicatively coupled with the microcontroller 7. Moreover the digital part 1 includes a power supply unit 10 electrically coupled with the microcontroller 7, wherein the power supply unit 10 is configured to provide a power supply to the microcontroller 7. The analog part 2 includes a top scintillator 11 coupled with a first silicon photomultiplier - SiPM 12 and a bottom scintillator 13 coupled with a second silicon photomultiplier - SiPM 14. The first SiPM 12 and the second SiPM 14 include a photodetector 15 configured to detect single photons. The analog part 2 includes an amplifier 16. The first SiPM 12 and the second SiPM 14 are coupled with the amplifier 16. The analog part 2 includes a DC/DC converter 17, and a high voltage power supply - HVPS 18. The DC/DC converter 17 is communicatively coupled with the amplifier 16. The amplifier 16 is electrically coupled with the HVPS 18. The HVPS 18 is configured to supply voltage to the first SiPM 12 and the second SiPM 14 in a range of 50 V The DC/DC converter 17 is communicatively coupled with the power supply unit 10, while the power supply unit 10 is electrically coupled with the HVPS 18. The DC/DC converter 17 is configured to provide a correct supply voltage to the amplifier 16. The analog part 2 includes an analog track environment sensor 19 and an analog track control unit 20. The analog track control unit 20 is an independent unit for controlling and monitoring the analog part 2, electrically coupled with the HVPS 18 and communicatively coupled with the analog track environment sensor 19, the microcontroller 7 and the DC/DC converter 17, wherein the DC/DC converter 17 is controlled from a level of the analog track control unit 20. The ADC 8 is communicatively coupled with the amplifier 16.

Cosmic ray detector in a second embodiment comprises a digital part 1 and an analog part 2. The digital part 1 includes a WiFi module 3 communicatively coupled with a WiFi antenna connector 4. The WiFi module 3 is configured to provide a connection to the Internet. The digital part 1 includes also a GPS module 5 communicatively coupled with a GPS antenna connector 6. The GPS module 5 is configured to provide a synchronization of a plurality of clocks associated with the cosmic ray detector and determines geographic location of the cosmic ray detector. The digital part 1 includes an internal GPS antenna 21 and the internal GPS antenna 21 is coupled with the GPS antenna connector 6. Furthermore, the digital part 1 includes a microcontroller 7, an analog-digital converter - ADC 8 and a non-volatile memory 9. The WiFi module 3, the GPS module 5, the ADC 8 and the non-volatile memory 9 are communicatively coupled with the microcontroller 7. The non-volatile memory 9 is configured to store settings intended to be unchanged and to store errors and WiFi network settings. Moreover the digital part 1 includes a power supply unit 10 electrically coupled with the microcontroller 7, wherein the power supply unit 10 is configured to provide a power supply to the microcontroller 7. The digital part 1 includes a digital environment sensor 22 and the digital environment sensor 22 is communicatively coupled with the microcontroller 7. Moreover, the digital part 1 includes a position sensor 23, which is an accelerometer and the position sensor 23 is communicatively coupled with the microcontroller 7, wherein the position sensor 23 is configured to determine a correct position of the cosmic ray detector. The analog part 2 includes a top scintillator 11 coupled with a first silicon photomultiplier - SiPM 12 and a bottom scintillator 13 coupled with a second silicon photomultiplier - SiPM 14. The top scintillator 11 and the bottom scintillator 13 are dimensioned as 10 cm x 10 cm x 1 cm. The first SiPM 12 and the second SiPM 14 include a photodetector 15 configured to detect single photons. The analog part 2 includes a first amplifier 16 and the second amplifier 16'. The first SiPM 12 is coupled with the first amplifier 16 and the second SiPM 14 is coupled with the second amplifier 16'. The analog part 2 includes a DC/DC converter 17, a first high voltage power supply - HVPS 18 and a second high voltage power supply - HVPS 18'. The DC/DC converter 17 is communicatively coupled with the first amplifier 16 and the second amplifier 16'. The first amplifier 16 is electrically coupled with the first HVPS 18, while the second amplifier 16' is electrically coupled with the second HVPS 18'. The first HVPS 18 and the second HVPS 18' are configured to supply voltage to the first SiPM 12 and the second SiPM 14 in a range of 50 V The DC/DC converter 17 is communicatively coupled with the power supply unit 10, while the power supply unit 10 is electrically coupled with the first HVPS 18 and the second HVPS 18'. The DC/DC converter 17 is configured to provide a correct supply voltage to the first amplifier 16 and the second amplifier 16'. The analog part 2 includes an analog track environment sensor 19, which is a temperature sensor, and an analog track control unit 20. The analog track environment sensor 19 is configured to monitor ambient temperature. The analog track control unit 20 is an independent unit for controlling and monitoring the analog part 2, electrically coupled with the first HVPS 18 and the second HVPS 18' and communicatively coupled with the analog track environment sensor 19, the microcontroller 7 and the DC/DC converter 17, wherein the DC/DC converter 17 is controlled from a level of the analog track control unit 20. The ADC 8 is communicatively coupled with the first amplifier 16 and the second amplifier 16'. The digital part 1 includes a display 24 and the display 24 is communicatively coupled with the microcontroller 7, wherein the display 24 is configured to display a status of the cosmic ray detector. Moreover, the digital part 1 includes a micro SD card reader module 25 and the micro SD card reader module 25 is communicatively coupled with the microcontroller 7, while the micro SD card reader module 25 is configured to save detections.

Method for detecting cosmic rays in a first execution example is executed using the cosmic ray detector according to the invention in the first embodiment. In a first step the top scintillator 11 and/or the bottom scintillator 13 emits light in the UV and visible range after absorbing ionizing radiation (e.g., after being hit by a muon). In a second step at least one of the first SiPM 12 and/or the second SiPM 14 detects the light signal (or signals) generated in at least one of the top scintillator 11 and the bottom scintillator 13 after capturing a cosmic ray particle. In a third step the amplifier 16 amplifies a weak electrical signal (or signals) generated by the first SiPM 12 and/or the second SiPM 14 into a signal with a higher amplitude. In a fourth step the amplified signal goes to the ADC 8. In a fifth step the microcontroller 7 analyzes signal from the ADC 8 and sends analyzed data for further processing in other systems.

Method for detecting cosmic rays in a second execution example is executed using the cosmic ray detector according to the invention in the second embodiment. In a first step the top scintillator 11 and/or the bottom scintillator 13 emits light in the UV and visible range after absorbing ionizing radiation (e.g., after being hit by a muon). In a second step at least one of the first SiPM 12 and/or the second SiPM 14 detects the light signal (or signals) generated in at least one of the top scintillator 11 and the bottom scintillator 13 after capturing a cosmic ray particle. In a third step the first amplifier 16 and/or the second amplifier 16' amplifies a weak electrical signal (or signals) generated by the first SiPM 12 and/or the second SiPM 14 into a signal with a higher amplitude and moreover conditions the signal to adapt it for further processing in next steps. In a fourth step the amplified signal goes to the ADC 8. In a fifth step the microcontroller 7 analyzes signal from the ADC 8 and sends analyzed data via the WiFi module 3 for further processing in other systems and displays the analyzed data on the display 24.

System for facilitating earthquake prediction by detecting cosmic rays in a first embodiment includes a processing device 100, a communication device 101, and a storage device 102. The communication device 101 is communicatively coupled with the processing device 100 and the storage device 102. The storage device 102 is communicatively coupled with the processing device 100. The communication device 101 is configured for receiving a plurality of cosmic rays information from the five cosmic ray detectors 104 according to the invention in the first embodiment, installed in five locations. The communication device 101 is configured for transmitting an alert to a client device 105 associated with a client in one seismically risky location. The client device 105 includes a smartphone. The processing device 100 is configured for analyzing the plurality of cosmic rays information, as well as the processing device 100 is configured for comparing a plurality of seismic stability data and the plurality of cosmic rays information and further determining one seismic risk factor corresponding to one location of the five locations. The processing device 100 is configured for identifying the at least one seismically risky location of the plurality of locations based on the at least one seismic risk factor and generating the at least one alert based on the identification, wherein the storage device 102 is configured for retrieving the plurality of seismic stability data associated with the plurality of locations based on the analyzing.

System for facilitating earthquake prediction by detecting cosmic rays in a second embodiment. The system includes a processing device 100, a communication device 101, and a storage device 102. The communication device 101 is communicatively coupled with the processing device 100 and the storage device 102. The storage device 102 is communicatively coupled with the processing device 100. The communication device 101 is configured for receiving a plurality of cosmic rays information from the five cosmic ray detectors 104 according to the invention in the first embodiment, installed in five locations. The system is implemented in an online platform 200 hosted on a centralized server 202. The centralized server 202 is communicatively coupled with other network entities, such as, a mobile device 206 which is a smartphone, other electronic devices 210 which are desktop computers 212, server computers 213, databases 214, sensors 216, and actuators 217 over a communication network 204 which is the Internet. The online platform 200 is accessible through a web-based software application or browser compatible with a computing device 700, which includes a processing unit 702 and a system memory 704. The system memory 704 includes operating system 705, a programming module 706, and a program data 707. The system memory 704 comprises flash memory. The programming module 706 includes an image-processing module, a machine learning module and an image classifying module. The operating system 705 is suitable for controlling an operation of the computing device 700. The computing device 700 includes a removable data storage device 709 and a non-removable data storage device 710. The computing device 700 includes an input device 712, which is a keyboard. Moreover the computing device 700 includes an output device 714, which is a display. The computing device 700 includes a communication connection 716 that allows the computing device 700 to communicate with other computing devices 700.

Method for facilitating earthquake prediction by detecting cosmic rays in a first execution example is executed using the system according to the invention in the first embodiment. In a first step one receives, using the communication device 101, a plurality of cosmic rays information from the five cosmic rays detectors, according to the invention in the first embodiment, installed in the five locations. In a second step one analyzes, using the processing device 100, the plurality of cosmic rays information. In a third step one retrieves, using the storage device 102, a plurality of cosmic ray data associated with the five locations based on the analysis. In a fourth step one compares, using the processing device 100, the plurality of cosmic rays data and determines, using the processing device 100, at least one seismic risk factor corresponding to at least one location of the five locations. In a fifth step one identifies, using the processing device 100, at least one seismically risky location of the five locations based on the at least one seismic risk factor. In a sixth step one generates, using the processing device 100, at least one alert based on the identification and transmits, using the communication device 101, the at least one alert to at least one client device 105 associated with at least one client in the at least one seismically risky location.

Method for facilitating earthquake prediction by detecting cosmic rays in a second execution example is executed using the system according to the invention in the second embodiment. In a first step one receives, using the communication device 101, a plurality of cosmic rays information from locations most relevant to earthquake monitoring and forecast, from the five cosmic rays detectors, according to the invention in the first embodiment, installed in the five locations. In a second step one analyzes, using the processing device 100, the plurality of cosmic rays information and one transmits the collected data to the online platform 200 and analyzes the data using machine learning algorithms included in the programming module 706 using computing device 700. In a third step one retrieves, using the storage device 102, a plurality of cosmic ray data associated with the five locations based on the analysis. In a fourth step one compares, using the processing device 100, the plurality of cosmic rays data and determines, using the processing device 100, at least one seismic risk factor corresponding to at least one location of the five locations. Moreover, in the third and the fourth step one extracts patterns based on the analysis and identifies correlations based on the extracted patterns. In a fifth step one identifies, using the processing device 100, at least one seismically risky location of the five locations based on the at least one seismic risk factor. Moreover, in the fifth step one generates predictions regarding earthquake events analyzing the correlations from the fourth step. In a sixth step one generates, using the processing device 100, at least one alert based on the identification and transmits, using the communication device 101, the at least one alert to at least one client device 105 associated with at least one client in the at least one seismically risky location, i.e. one alerts clients in an earthquake-predicted area.

Generally, consistent with embodiments of the system according to the invention, program modules may include routines, programs, components, data structures, and other types of structures that may perform particular tasks or that may implement particular abstract data types.

Moreover, embodiments of the system according to the invention may be practiced with other computer system configurations, including hand-held devices, general-purpose graphics processor-based systems, multiprocessor systems, microprocessor-based or programmable consumer electronics, application-specific integrated circuit-based electronics, minicomputers, mainframe computers, and the like. Embodiments of the system according to the invention may also be practiced in distributed computing environments where tasks are performed by remote processing devices that are linked through a communications network. In a distributed computing environment, program modules may be located in both local and remote memory storage devices.

Furthermore, embodiments of the system according to the invention may be practiced in an electrical circuit comprising discrete electronic elements, packaged or integrated electronic chips containing logic gates, a circuit utilizing a microprocessor, or on a single chip containing electronic elements or microprocessors. Embodiments of the system according to the invention may also be practiced using other technologies capable of performing logical operations such as, for example, AND, OR, and NOT, including but not limited to mechanical, optical, fluidic, and quantum technologies.

In addition, embodiments of the system according to the invention may be practiced within a general-purpose computer or in any other circuits or systems. Embodiments of the system according to the invention, for example, may be implemented as a computer process (method), a computing system, or as an article of manufacture, such as a computer program product or computer-readable media. The computer program product may be a computer storage media readable by a computer system and encoding a computer program of instructions for executing a computer process. The computer program product may also be a propagated signal on a carrier readable by a computing system and encoding a computer program of instructions for executing a computer process.

Accordingly, the present system according to the invention may be embodied in hardware and/or in software (including firmware, resident software, micro-code, etc.). In other words, embodiments of the system according to the invention may take the form of a computer program product on a computer-usable or computer-readable storage medium having computer-usable or computer-readable program code embodied in the medium for use by or in connection with an instruction execution system.

A computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random-access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

Embodiments of the system according to the invention, for example, are described below with reference to block diagrams and/or operational illustrations of methods, systems, and computer program products according to embodiments of the system according to the invention. While certain embodiments of the system according to the invention have been described, other embodiments may exist. Furthermore, although embodiments of the system according to the invention have been described as being associated with data stored in memory and other storage mediums, data can also be stored on or read from other types of computer-readable media, such as secondary storage devices, like hard disks, solid-state storage (e.g., USB drive), or a CD-ROM, a carrier wave from the Internet, or other forms of RAM or ROM.

## Claims

1. A Cosmic ray detector **characterized in that** the cosmic ray detector comprises a digital part (1) and an analog part (2), wherein the digital part (1) includes a WiFi module (3) communicatively coupled with a WiFi antenna connector (4), a GPS module (5) communicatively coupled with a GPS antenna connector (6), a microcontroller (7), an analog-digital converter - ADC (8) and a non-volatile memory (9), wherein the WiFi module (3), the GPS module (5), the ADC (8) and the non-volatile memory (9) are communicatively coupled with the microcontroller (7), the digital part (1) further includes a power supply unit (10) electrically coupled with the microcontroller (7) and configured to provide a power supply to the microcontroller (7), wherein the analog part (2) includes a top scintillator (11) coupled with a first silicon photomultiplier - SiPM (12) and a bottom scintillator (13) coupled with a second silicon photomultiplier - SiPM (14), wherein the first SiPM (12) and the second SiPM (14) include a photodetector (15) configured to detect single photons, the analog part (2) further includes at least one amplifier (16), wherein the first SiPM (12) and the second SiPM (14) are coupled with the amplifier (16), yet further the analog part (2) includes a DC/DC converter (17) and at least one high voltage power supply - HVPS (18), wherein the DC/DC converter (17) is communicatively coupled with the amplifier (16) and the amplifier (16) is electrically coupled with the HVPS (18), while the HVPS (18) is configured to supply voltage to the first SiPM (12) and the second SiPM (14) within a range from 10 V to 100 V, and the DC/DC converter (17) is communicatively coupled with the power supply unit (10), while the power supply unit (10) is electrically coupled with the HVPS (18), wherein the DC/DC converter (17) is configured to provide a correct supply voltage to the amplifier (16), and further, the analog part (2) includes at least one analog track environment sensor (19) and an analog track control unit (20), wherein the analog track control unit (20) is an independent unit for controlling and monitoring the analog part (2), said analog track control unit (20) is electrically coupled with the HVPS (18) and communicatively coupled with the at least one analog track environment sensor (19), the microcontroller (7) and the DC/DC converter (17), wherein the DC/DC converter (17) is controlled from a level of the analog track control unit (20), and moreover the ADC (8) is communicatively coupled with the amplifier (16).

2. The cosmic ray detector, according to claim 1, **wherein** the top scintillator (11) and/or the bottom scintillator (13) have the same dimensions.

3. The cosmic ray detector, according to claim 1, **wherein** the top scintillator (11) and/or the bottom scintillator (13) are dimensioned as 10 cm x 10 cm x 1 cm.

4. The cosmic ray detector, according to claim 1 **wherein** the digital part (1) includes an internal GPS antenna (21) and the GPS antenna (21) is coupled with the GPS antenna connector (6).

5. The cosmic ray detector, according to claim 1 **wherein** the digital part (1) includes at least one digital environment sensor (22) and the digital environment sensor (22) is communicatively coupled with the microcontroller (7).

6. The cosmic ray detector, according to claim 1 **wherein** the digital part (1) includes at least one position sensor (23) and the position sensor (23) is communicatively coupled with the microcontroller (7).

7. The cosmic ray detector, according to claim 5 **wherein** the position sensor (24) is accelerometer and the position sensor (24) is configured to determine a correct position of the cosmic ray detector.

8. The cosmic ray detector, according to claim 1 **wherein** the digital part (1) includes a display (25) and the display (25) is communicatively coupled with the microcontroller (7), wherein the display (25) is configured to display a status of the cosmic ray detector.

9. The cosmic ray detector, according to claim 1 **wherein** the digital part (1) includes a micro SD card reader module (26) and the micro SD card reader module (26) is communicatively coupled with the microcontroller (7).

10. The cosmic ray detector, according to claim 8 **wherein** the micro SD card reader module (26) is configured to save detections.

11. The cosmic ray detector, according to claim 1 **wherein** the analog track environment sensor (19) is a temperature sensor.

12. The cosmic ray detector, according to claim 1 **wherein** the non-volatile memory (9) is configured to store settings intended to be unchanged.

13. The cosmic ray detector, according to claim 1 **wherein** the non-volatile memory (9) is configured to store errors and WiFi network settings.

14. The cosmic ray detector, according to claim 1 **wherein** the at least one analog track environment sensor (19) is configured to monitor the temperature of individual components and/or ambient temperature and/or humidity and/or pressure.

15. The cosmic ray detector, according to claim 1 **wherein** the WiFi module (3) is configured to provide a connection to the Internet.

16. The cosmic ray detector, according to claim 1 **wherein** the GPS module (5) is configured to provide a synchronization of a plurality of clocks associated with the cosmic ray detector and determines geographic location of the cosmic ray detector.

17. A method for detecting cosmic rays using a cosmic ray detector according to any claims 1-16, wherein in a first step a top scintillator (11) and/or a bottom scintillator (13) emits light in the UV and visible range after absorbing ionizing radiation (e.g., after being hit by a muon), wherein in a second step at least one of a first SiPM (12) and/or a second SiPM (14) detects the light signal (or signals) generated in at least one of the top scintillator (11) and the bottom scintillator (13) after capturing a cosmic ray particle, and next in a third step an amplifier (16) amplifies a weak electrical signal (or signals) generated by the first SiPM (12) and/or the second SiPM (14) into a signal with a higher amplitude and in a fourth step the amplified signal goes to an analog-digital converter - ADC (8) and in a fifth step a microcontroller (7) analyzes signal from the ADC (8) and sends analyzed data for further processing in other systems.

18. The method for detecting cosmic rays, according to claim 17 **wherein** in the third step, the amplifier (16) conditions the signal to adapt it for further processing in next steps.

19. The method for detecting cosmic rays, according to claim 17 **wherein** in the fifth step, the microcontroller (7) sends the analyzed data via the WiFi module (3).

20. The method for detecting cosmic rays, according to claim 17 **wherein** in the fifth step, the microcontroller (7) stores the analyzed data in the micro SD card reader module (26).

21. The method for detecting cosmic rays, according to claim 17 **wherein** in the fifth step, the microcontroller (7) displays the analyzed data on the display (25).

22. A system for facilitating earthquake prediction by detecting cosmic rays, **characterized in that** the system comprises a processing device (100), a communication device (101), and a storage device (102), wherein the communication device (101) is communicatively coupled with the processing device (100) and the storage device (102), while the storage device (102) is communicatively coupled with the processing device (100), wherein the communication device (101) is configured for receiving a plurality of cosmic rays information from a plurality of cosmic ray detectors (104) according to any claims 1-16, installed in a plurality of locations and the communication device (101) is configured for transmitting at least one alert to at least one client device (105) associated with at least one client in at least one seismically risky location, wherein the at least one client device (105) includes, but is not limited to, a smartphone, a laptop, a desktop, a smartwatch, a tablet computer, a disaster/emergency alarm system, and the processing device (100) is configured for analyzing the plurality of cosmic rays information, as well as the processing device (100) is configured for comparing a plurality of seismic stability data and the plurality of cosmic rays information and further determining at least one seismic risk factor corresponding to at least one location of the plurality of locations, yet further, the processing device (100) is configured for identifying the at least one seismically risky location of the plurality of locations based on the at least one seismic risk factor and generating the at least one alert based on the identification, wherein the storage device (102) is configured for retrieving the plurality of seismic stability data associated with the plurality of locations based on the analysis.

23. The system according to claim 22 **wherein** the system is implemented in an online platform (200) hosted on a centralized server (202), wherein the centralized server (202) is communicatively coupled with other network entities, such as, for example, a mobile device (206) chosen from, but not limited to the set of: a smartphone, a laptop, a tablet computer, other electronic devices (210) chosen from, but not limited to the set of: desktop computers (212), server computers (213), databases (214), disaster/emergency alarm systems (215), sensors (216), and actuators (217) over a communication network (204) such as, but not limited to the Internet, wherein the online platform (200) is accessible through a web-based software application or browser compatible with a computing device (700), which includes at least one processing unit (702) and a system memory (704), wherein the system memory (704) includes operating system (705), at least one programming module (706), and a program data (707), while the system memory (704) comprises, but is not limited to the set of: volatile (e.g., random-access memory (RAM)), non-volatile (e.g., read-only memory (ROM)), flash memory, or any combination, wherein the programming module (706) includes at least one from the set of: image-processing module, machine learning module or image classifying module, and the operating system (705) is suitable for controlling an operation of the computing device (700).

24. The system according to claim 23 **wherein** the computing device (700) includes at least one removable data storage device (709) and/or at least one non-removable data storage device (710).

25. The system according to claim 23 **wherein** the computing device (700) includes at least one input device (712) chosen from, but not limited to the set of: a keyboard, a mouse, a pen, a sound input device, a touch input device, a location sensor, a camera, a biometric sensor.

26. The system according to claim 23 **wherein** the computing device (700) includes at least one output device (714) chosen from, but not limited to the set of: a display, speakers, a printer.

27. The system according to claim 23 **wherein** the computing device (700) includes a communication connection (716) that allows the computing device (700) to communicate with other computing devices (700).

28. A method for facilitating earthquake prediction by detecting cosmic rays **wherein** the method is executed using a system according to any claims 22-26 and in a first step one receives, using a communication device (101), a plurality of cosmic rays information from a plurality of cosmic rays detectors according to any claims 1-16 installed in a plurality of locations, and further in a second step one analyzes, using a processing device (100), the plurality of cosmic rays information, afterwards in a third step one retrieves, using a storage device (102), a plurality of cosmic ray data associated with the plurality of locations based on the analysis, afterwards in a fourth step one compares, using the processing device (100), the plurality of cosmic rays data and determines, using the processing device (100), at least one seismic risk factor corresponding to at least one location of the plurality of locations, and then in a fifth step one identifies, using the processing device (100), at least one seismically risky location of the plurality of locations based on the at least one seismic risk factor, afterwards in a sixth step one generates, using the processing device (100), at least one alert based on the identification and transmits, using the communication device (101), the at least one alert to at least one client device (105) associated with at least one client in the at least one seismically risky location.

29. The method according to claim 28 **wherein** in the first step one receives data from locations most relevant to earthquake monitoring and forecast, next in the second step one transmits the collected data to an online platform (200), and analyzes the data using machine learning algorithms included in a programming module (706) using a computing device (700), next in the third and the fourth step one extracts patterns based on the analysis and identifies correlations based on the extracted patterns, and in the fifth step one generates predictions regarding earthquake events analyzing the correlations from the fourth step, afterward in a sixth step one alerts clients in an earthquake-predicted area.
